# EUROPÄISCHE PATENTANMELDUNG

(11) **EP 1 147 798 A1**
(43) Veröffentlichungstag der Anmeldung: **24.10.2001**
(21) Anmeldenummer: 01106005.0
(22) Anmeldetag: 10.03.2001
(51) Int. Cl.: B01D 29/11, B01D 29/21

(54) **Filterelement**

(30) Priorität: 19.04.2000 DE 10019397
(71) Anmelder: ARGO GmbH für Fluidtechnik, 76703 Kraichtal-Menzingen (DE)
(72) Erfinder: Seiler, Kurt, 76703 Kraichtal (DE)
(74) Vertreter: Hoeger, Stellrecht & Partner

(57) **Zusammenfassung**

Um ein Filterelement, insbesondere zum Filtrieren von Mineralölen in Hydraulik-Systemen, mit einem Filtermaterial und einem das Filtermaterial abstützenden, aus einem Lochblech (16) mit einer Vielzahl von Durchflußöffnungen geformten Stützrohr (12), derart weiterzubilden, daß es eine hohe mechanische Stabilität aufweist und kostengünstig herstellbar ist, wird erfindungsgemäß vorgeschlagen, daß das Stützrohr (12) einen sich wendelförmig entlang der Stützrohrwandung erstreckenden Stoß (40) aufweist, der durch die in Umfangsrichtung aufeinander treffenden Kanten (36,38) des Lochblechs (16) gebildet ist.

## Beschreibung

Die Erfindung betrifft ein Filterelement, insbesondere zum Filtrieren von Mineralölen in Hydraulik-Systemen, mit einem Filtermaterial und einem das Filtermaterial abstützenden, aus einem Lochblech mit einer Vielzahl von Durchflußöffnungen geformten Stützrohr.

Derartige Filterelemente sind zur Filtrierung von Fluiden, insbesondere von Mineralölen in Hydraulik-Systemen, allgemein in Gebrauch. Als Filtermaterial kommt meist ein Filterbalg zum Einsatz, der beispielsweise aus einem Filterpapier gefaltet sein kann. Der Filterbalg ist in Form eines Hohlzylinders ausgebildet und wird von dem zu filtrierenden Fluid in radialer Richtung durchströmt. Als Stütze für das Filtermaterial kommt das Stützrohr zum Einsatz, an dessen Wandung sich das Filtermaterial anlegt. Je nach Durchströmrichtung des zu filtrierenden Fluids kann das Stützrohr auf der Innenseite oder auf der Außenseite des hohlzylinderförmigen Filtermaterials angeordnet sein.

Das Stützrohr wird üblicherweise aus einem Lochblech mit einer Vielzahl von Durchflußöffnungen geformt. Hierzu ist es üblich, das Lochblech mit rechteckförmigem Zuschnitt aufzurollen und anschließend die aufeinander treffenden Längskanten des Lochblechs miteinander zu verschweißen, um sicherzustellen, daß das so geformte Stützrohr dem Druckabfall Stand halten kann, der sich beim Einsatz des Filterelementes in Hydraulik-Systemen am Filterelement einstellt.

Die voranstehend genannten Filterelemente sind in der Praxis vielfach im Einsatz, sie sind jedoch mit nicht unbeträchtlichen Herstellungskosten verbunden. Außerdem besteht die Gefahr, daß das zum Einsatz kommende Stützrohr an der Schweißnaht einknickt, wenn es eine hohe mechanische Belastung erfährt.

Aufgabe der vorliegenden Erfindung ist es, ein Filterelement der eingangs genannten Art derart weiterzubilden, daß es eine hohe mechanische Stabilität aufweist und kostengünstiger herstellbar ist. Diese Aufgabe wird bei einem Filterelement der gattungsgemäßen Art erfindungsgemäß dadurch gelöst, daß das Stützrohr einen sich wendelförmig entlang der Stützrohrwandung erstreckenden Stoß aufweist, der durch die in Umfangsrichtung aufeinander treffenden Kanten des Lochblechs gebildet ist.

In Abkehr von der üblichen Ausgestaltung des Stützrohres mit einer sich parallel zur Längsachse des Filterelementes erstreckenden Schweißnaht ist beim erfindungsgemäßen Filterelement vorgesehen, daß die Längskanten des aufgerollten Lochblechs einen wendelförmigen Stoß ausbilden. Es hat sich gezeigt, daß durch eine derartige Ausgestaltung ein auch hohen Drücken Stand haltendes Stützrohr für das Filterelement bereitgestellt werden kann, ohne daß hierbei die Längskanten des zum Stützrohr aufgerollten Lochblechs miteinander verschweißt werden müssen. Vielmehr ist es ausreichend, wenn die Längskanten des zum Stützrohr aufgerollten Lochblechs ohne Schweißnaht verbleiben, sofern nur sichergestellt ist, daß sich der so gebildete Stoß wendelförmig entlang der Stützrohrwandung erstreckt.

Zur Herstellung des beim erfindungsgemäßen Filterelement zum Einsatz kommenden Stützrohres ist es lediglich erforderlich, das Lochblech beispielsweise parallelogrammförmig zuzuschneiden und anschließend aufzurollen. Da ein Verschweißen des Lochblechs entfallen kann, zeichnet sich das erfindungsgemäße Filterelement durch geringere Herstellungskosten aus, wobei jedoch durch die wendelförmige Ausgestaltung des Stoßes sichergestellt wird, daß das Filterelement auch hohen hydraulischen Drücken Stand halten kann.

Wie bereits eingangs erwähnt, kommt als Filtermaterial meist ein zu einem Filterbalg gefaltetes Filterpapier zum Einsatz. Hierbei ergibt sich mittels der erfindungsgemäßen Ausgestaltung der weitere Vorteil, daß sich der Bereich, in dem die Längsfalten des Filtermaterials auf die Stoßverbindung des Stützrohres treffen, aufgrund des wendelförmigen Verlaufs des Stoßes auf viele Längsfalten verteilt. Dies hat eine bessere Stabilität der Falten bei Druckbelastung, insbesondere bei Druckschwankungen, zur Folge.

Zur Erzielung einer besonders hohen Stabilität des Filterelementes ist es von Vorteil, wenn sich der Stoß nur über einen Teilbereich des Umfangs des Stützrohrs erstreckt. Besonders günstig ist es hierbei, wenn sich der Stoß maximal über den halben Umfang des Stützrohrs erstreckt, vorzugsweise etwa über ein Drittel des Umfanges.

Bei einer besonders bevorzugten Ausführungsform ist vorgesehen, daß die Kanten des Lochblechs überlappungsfrei aufeinander treffen. Eine derartige Ausgestaltung hat sich insbesondere dann bewährt, wenn das Filterelement auf der Außenseite des Stützrohres angeordnet und radial von außen nach innen durchströmt wird. Bei einer derartigen Anordnung wird das Stützrohr einer Kompressionsbelastung ausgesetzt. Durch Vermeidung eines Überlapps des Lochblechs im Bereich des Stoßes wird bei einer derartigen Belastung sichergestellt, daß sich die Längskanten gegenseitig abstützen können.

Um bei höheren Druckdifferenzen einer axialen Verschiebung des Stoßes entgegenzuwirken, ist es günstig, wenn die Steigung des wendelförmigen Stoßes teilweise linksgängig und teilweise rechtsgängig verläuft. Eine derartige Ausgestaltung kann auf einfache Weise dadurch erzielt werden, daß das Lochblech pfeilförmig zugeschnitten und anschließend aufgerollt wird.

Die nachfolgende Beschreibung bevorzugter Ausführungsformen der Erfindung dient im Zusammenhang mit der Zeichnung der näheren Erläuterung. Es zeigen:
- Figur 1:: eine Seitenansicht einer ersten Ausfüh- rungsform eines Filterelementes mit einem aus einem parallelogrammförmigen Loch- blech geformten Stützrohr;
- Figur 1A:: eine Seitenansicht einer zweiten Ausfüh- rungsform eines Filterelementes mit einem aus einem pfeilförmigen Lochblech geform- ten Stützrohr;
- Figur 2:: einen Zuschnitt des Lochblechs gemäß Fi- gur 1 und
- Figur 2A:: einen Zuschnitt des Lochblechs gemäß Fi- gur 1A.

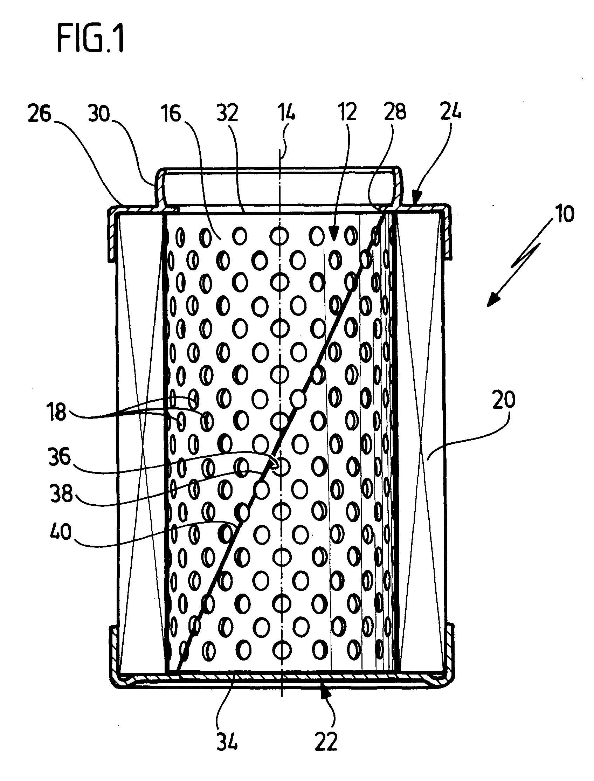

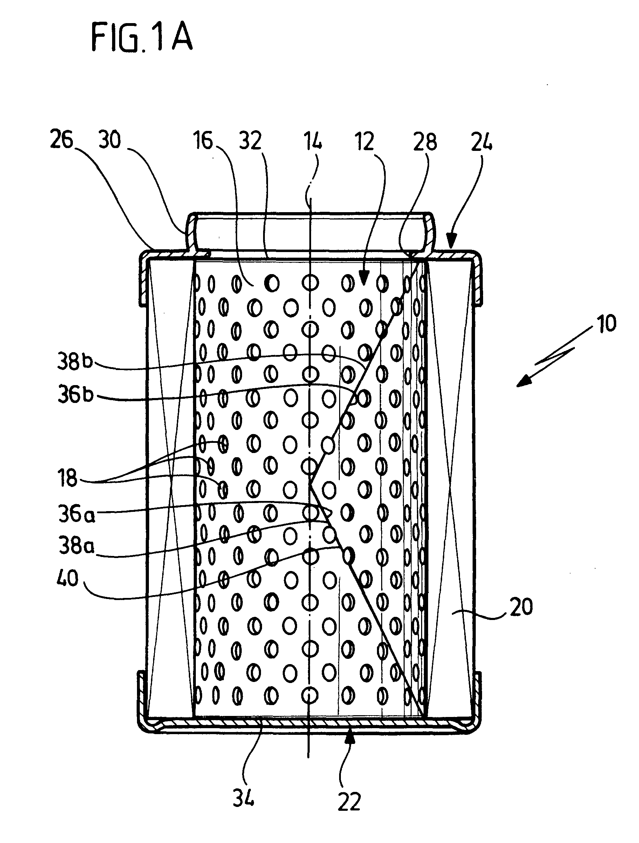

In Figur 1 ist ein insgesamt mit dem Bezugszeichen 10 belegtes Filterelement gemäß einer ersten Ausführungsform der Erfindung schematisch dargestellt. Dieses umfaßt ein hohlzylindrisches Stützrohr 12, dessen Zylinderachse eine Längsachse 14 des Filterelementes 10 bildet. Das Stützrohr 12 ist aus einem Lochblech 16 aufgerollt und weist eine Vielzahl von Durchflußöffnungen 18 auf.

Auf dem Außenmantel des Stützrohres 12 ist ein hohlzylinderförmiges Filtermaterial in Form eines Filterbalges 20 angeordnet, der in üblicher Weise aus einem sternförmig gefalteten Filterpapier gefertigt ist.

An seinem unteren Ende weist das Filterelement 10 eine fluiddichte untere Abschlußkappe 22 auf, die mit ihrem äußeren Randbereich koaxial zur Längsachse 14 nach oben in Richtung auf den Filterbalg 20 abgekröpft ist und einen unteren Randbereich des Filterbalges 20 umgibt. Mittels eines Klebstoffes, beispielsweise eines Epoxidharzklebers, ist die untere Abschlußkappe 22 mit dem unteren Randbereich des Filterbalges 20 und mit dem Stützrohr 12 fluiddicht verbunden.

An seinem oberen Ende weist das Filterelement 10 eine obere Abschlußkappe 24 auf. Diese umfaßt einen koaxial nach unten in Richtung auf den Filterbalg 20 abgekröpften Haltering 26, der den oberen Randbereich des Filterbalges 20 umgibt und im Bereich des Stützrohres 12 eine zentrale, kreisförmige Abflußöffnung 28 definiert, an die sich koaxial zur Längsachse 14 ausgerichtet und dem Stützrohr 12 abgewandt ein einstückig mit dem Haltering 26 verbundener Anschlußstutzen 30 anschließt.

Entsprechend der Festlegung der unteren Abschlußkappe 22 ist auch die obere Abschlußkappe 24 mittels eines Klebstoffes mit dem oberen Randbereich des Filterbalges 20 und mit dem Stützrohr 12 fluiddicht verbunden.

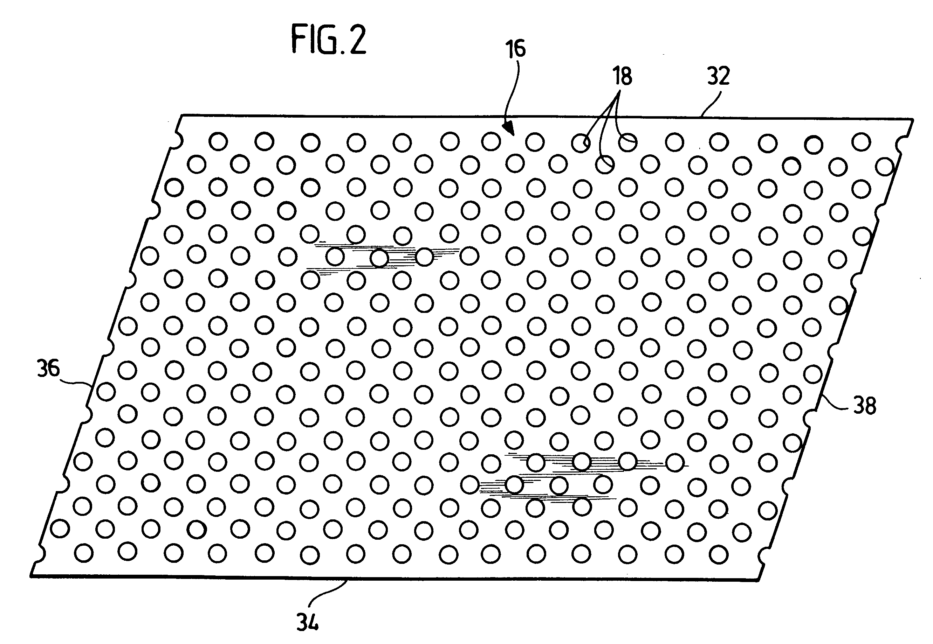

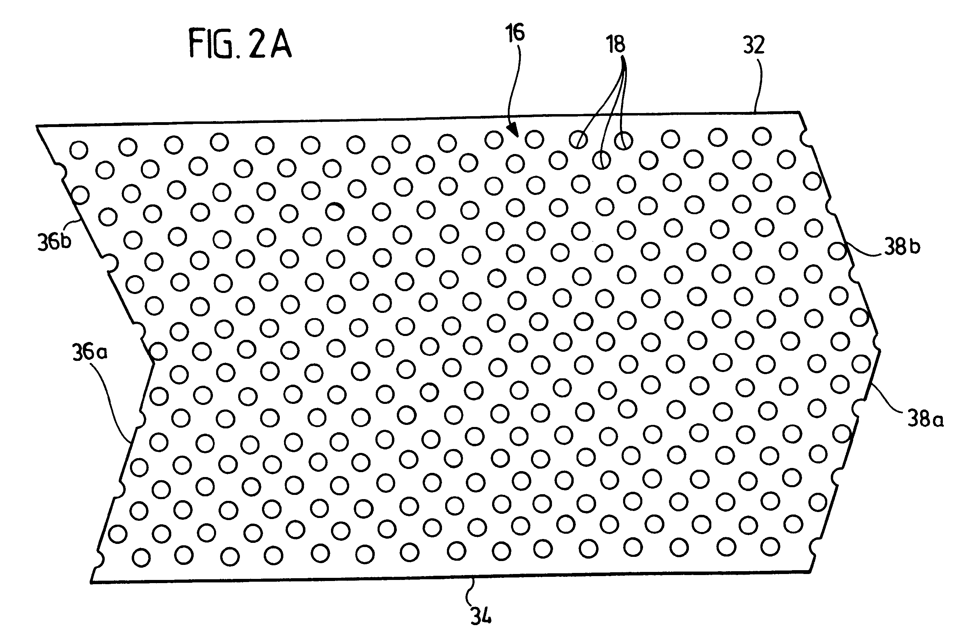

Wie bereits erwähnt, wird das Stützrohr 12 durch Aufrollen des Lochblechs 16 hergestellt. Hierzu wird das Lochblech 16 parallelogrammförmig zugeschnitten, wie dies in Figur 2 dargestellt ist. Es umfaßt eine Oberkante 32 und eine Unterkante 34, die die Stirnseiten des Stützrohres 12 ausbilden und parallel zueinander ausgerichtet sind, sowie schräg zu den Ober- und Unterkanten ausgerichtete erste und zweite Längskanten 36 bzw. 38. Wird das zu einem Parallelogramm zugeschnittene Lochblech 16 um die senkrecht zu den Ober- und Unterkanten 33 bzw. 34 verlaufende Längsachse 14 zum Stützrohr 12 aufgerollt, so bilden die beiden Längskanten 36 und 38, wie aus Figur 1 deutlich wird, einen wendelförmig entlang der Stützrohrwandung verlaufenden Stoß 40, der durch die in Umfangsrichtung des Stützrohres 12 aufeinander treffenden Längskanten 36 und 38 des Lochblechs 16 gebildet wird. Der wendelförmige Stoß 40 verleiht dem Stützrohr 12 eine hohe mechanische Stabilität, ohne daß es erforderlich ist, die beiden Längskanten 36 und 38 miteinander zu verschweißen. Der wendelförmige Stoß 40 verläuft hierbei lediglich über einen Teilbereich des Umfanges des Stützrohrs 12, vorzugsweise über einen Winkelbereich von 120°. Es hat sich herausgestellt, daß durch eine derartige Ausgestaltung des Stoßes eine besonders hohe Stabilität des Stützrohres 12 und damit des Filterelementes 10 erzielt werden kann.

Eine zweite Ausführungsform der Erfindung ist in den Figuren 1A und 2A dargestellt. Diese unterscheidet sich von der voranstehend unter Bezugnahme auf die Figuren 1 und 2 erläuterten Ausführungsform lediglich dadurch, daß statt eines parallelogrammförmigen Lochbleches für das Stützrohr ein Lochblech zum Einsatz kommt, das pfeilförmig ausgestaltet ist. Identische Bauteile werden deshalb mit den gleichen Bezugszeichen bezeichnet wie in den Figuren 1 und 2.

Bei der in Figur 1A dargestellten Ausführungsform des Filterelementes weist das Stützrohr 12 ebenfalls einen wendelförmigen Stoß 40 auf. In Abkehr von der in Figur 1 dargestellten Ausführungsform weist der Stoß 40 jedoch einen linksgängigen Bereich und einen rechtsgängigen Bereich auf. Dadurch wird sichergestellt, daß sich der Stoß insbesondere bei starker Druckbelastung und/oder bei Druckschwankungen nicht in Richtung der Längsachse 14 verschiebt.

Die links- und rechtsgängigen Bereiche des wendelförmigen Stoßes 14 werden dadurch erzeugt, daß das Lochblech 16 - wie in Figur 2A dargestellt - pfeilförmig zugeschnitten wird dergestalt, daß die Längskanten jeweils zwei schräg zueinander ausgerichtete Abschnitte 36a und 36b bzw. 38a und 38b aufweisen. Hierbei sind die ersten Bereiche 36a und 38a sowie die zweiten Bereiche 36b und 38b jeweils parallel zueinander ausgerichtet und bilden jeweils einen rechts- bzw. linksgängigen Bereich des wendelförmigen Stoßes 40. In Fortführung der Erfindung kann selbstverständlich vorgesehen sein, daß statt eines einzigen linksgängigen und eines einzigen rechtsgängigen Bereiches mehrere links- bzw. rechtsgängige Bereiche für den wendelförmigen Stoß 40 vorgesehen sind.

Bei beiden voranstehend erläuterten Ausführungsformen des erfindungsgemäßen Filterelementes wird der Filterbalg 20 beim Filtrieren eines Fluids in radialer Richtung von außen nach innen vom zu filtrierenden Fluid durchströmt, das über die Durchflußöffnungen 18 in den Innenraum des Stützrohres 12 gelangen und von dort über die Abflußöffnung 28 das Filterelement 10 verlassen kann. Der sich beim Durchströmen ausbildende Druckabfall am Filterelement 10 bewirkt eine erhebliche Belastung des Stützrohres 12 in radialer Richtung. Hierbei wird durch die wendelförmige Ausgestaltung des Stoßes 40 sichergestellt, daß das Stützrohr 12 der Belastung Stand hält, ohne daß es erforderlich ist, die beiden Längskanten 36 und 38 des Lochbleches 16 miteinander zu verschweißen. Das Filterelement 10 kann somit in kostengünstiger Weise hergestellt werden und zeichnet sich durch eine verbesserte Umweltverträglichkeit aus, da eine energieintensive Schweißverbindung entfallen kann.

## Patentansprüche

1. Filterelement, insbesondere zum Filtrieren von Mineralölen in Hydraulik-Systemen, mit einem Filtermaterial und einem das Filtermaterial abstützenden, aus einem Lochblech mit einer Vielzahl von Durchflußöffnungen geformten Stützrohr, **dadurch gekennzeichnet, daß** das Stützrohr (12) einen sich wendelförmig entlang der Stützrohrwandung erstreckenden Stoß (40) aufweist, der durch die in Umfangsrichtung aufeinander treffenden Kanten (36, 38) des Lochblechs (16) gebildet ist.

2. Filterelement nach Anspruch 1, **dadurch gekennzeichnet, daß** sich der Stoß (40) nur über einen Teilbereich des Umfangs des Stützrohrs (12) erstreckt.

3. Filterelement nach Anspruch 1 oder 2, **dadurch gekennzeichnet, daß** sich der Stoß (40) maximal über den halben Umfang des Stützrohrs (12) erstreckt.

4. Filterelement nach einem der voranstehenden Ansprüche, **dadurch gekennzeichnet, daß** die Kanten (36, 38) des Lochblechs (16) im Bereich des Stoβes (40) überlappungsfrei aufeinander treffen.

5. Filterelement nach einem der voranstehenden Ansprüche, **dadurch gekennzeichnet, daß** die Steigung des wendelförmigen Stoßes (40) teilweise linksgängig und teilweise rechtsgängig (36a bzw. 36b) verläuft.
